# EUROPEAN PATENT SPECIFICATION

(11) **EP 2 641 476 B1**
(45) Date of publication and mention of the grant of the patent: **13.08.2014**
(21) Application number: 12160170.2
(22) Date of filing: 19.03.2012
(51) Int. Cl.: A23L 1/19

(54) **Dairy cream alternative**
Milchrahmalternative
Remplacement de crème de lait

(43) Date of publication of application: 25.09.2013
(73) Proprietor: Unilever N.V., 3013 AL Rotterdam (NL); Unilever PLC, London, Greater London EC4Y 0DY (GB)
(72) Inventor: Flöter, Eckhard, 14195 Berlin (DE); von Harras, Jaimy Chantal, 3133 AT Vlaardingen (NL)
(74) Representative: Wurfbain, Gilles L.

(56) References cited:
- EP-A1- 0 540 085
- EP-A1- 0 540 087
- EP-A1- 0 667 104
- "The Lipid Handbook with CD-ROM, Third Edition", CRC Press page 51, 54, 67,

## Description

### Field of the invention

The present invention relates to spoonable non-liquid water-continuous acidified food products and a process for the preparation thereof.

### Background of the invention

Non-dairy products, like liquid whipping creams, spreads and products with a spoonable non-liquid consistency are products wherein at least part of the dairy fat is replaced by vegetable fat. Such products are generally known as dairy cream alternatives. In general, vegetable fats are regarded as being healthier than dairy fat like milk fat and butter fat as the unsaturated fatty acid content in vegetable fats are higher than in dairy fat. Furthermore, especially natural vegetable fats that have not undergone hydrogenation have a lower trans unsaturated fatty acid content than dairy fats.

Sour cream is a well known dairy product that is obtained by fermenting a regular cream by certain kinds of lactic acid bacteria. The bacterial culture, which is introduced either deliberately or naturally, sours and thickens the cream. Its name stems from the production of lactic acid by bacterial fermentation, which is called souring. The taste of sour cream is only mildly sour.

Traditional sour cream contains about 18 to 20 weight percent (wt%) of butterfat based on total product. To address health concerns, light or reduced-fat sour creams have been developed that contain about 40% less butter fat than regular sour cream. Although such products contain less fat, the saturated fatty acid (SAFA) content of the used fat is still that of dairy fat.

Dairy cream alternatives have been developed as an alternative to sour cream based on dairy cream. For example, soured spoonable cream alternatives are described in EP 540085 and EP540087 based on fat mixtures of liquid oil and hardened lauric fats.

Consumers nowadays prefer lower fat products, like for example 10 wt% or less. Such products, including dairy cream alternatives, are not always easy to make as the low overall fat content may detrimentally affect product properties, like for example firmness and organoleptic properties.

In addition, there is a drive to not only lower the total amount of fat, but also the SAFA level of the fat itself as excessive consumption of SAFA has been associated with cardiovascular diseases.

The drive for lower fat and lower SAFA level of the fat itself is challenging as this may affect for example the organoleptic properties of products like sour cream and non-dairy cream alternatives thereof. Notably it affects the 'indulgency characteristics' like for example rich mouthfeel, for which these products are know and appreciated.

It is an object of the present invention to provide low fat dairy cream alternatives of sour cream like products. It is another object of the present invention to provide low fat dairy cream alternatives of sour cream like products that are low in SAFA.

A further object of the present invention is to provide low fat dairy cream alternatives of sour cream like products that provide good organoleptic properties and/or have good product firmness.

### Summary of the invention

It was found that spoonable non-liquid water-continuous acidified food products with at least 35 wt% of P2U triglycerides based on total amount of fat and wherein P is palmitic acid and U is unsaturated fatty acid provide good low fat dairy cream alternatives of sour cream like products.

Accordingly the invention relates to a spoonable non-liquid water-continuous acidified food product having a pH-value between 3.5 and 5.8, the food product comprising at least 60 wt% water and further comprising from 3 to 10 wt% fat and from 0.05 to 15 wt% protein, wherein the fat comprises at least a vegetable fat and wherein the fat comprises up to 60 wt% of saturated fatty acids (SAFA), at least 35 wt% P2U triglycerides and up to 7 wt% P3 triglycerides, wherein the ratio of SAFA:P2U is up to 1.7, and wherein P is palmitic acid and U is unsaturated fatty acid.

The invention further relates to process for the preparation of such a food product comprising the use of a palm based fat comprising at least 35 wt% of P2U triglycerides.

### Detailed description of the invention

Weight percentage (wt%) is based on the total weight of the composition unless otherwise stated. The terms 'fat' and 'oil' are used interchangeably. Where applicable the prefix 'liquid' or 'solid' is added to indicate if the fat or oil is liquid or solid at ambient temperature as understood by the person skilled in the art. The term 'structuring fat' refers to a fat that is solid at ambient temperature. Ambient temperature is a temperature of about 20 degrees Celsius.

### Spoonable non-liquid water-continuous acidified food product

The food product of the invention is a water-continuous emulsion comprising at least 60 wt% of water and further comprising a dispersed fat phase. Preferably the food product comprises at least 70 wt% and more preferably at least 80 wt% of water.

The product is spoonable and non-liquid at a temperature of 5 degrees Celsius. As such, it is similar to the structure of a traditional sour cream. For the avoidance of doubt, this excludes for example whipping cream as this may be conceived to be spoonable but is liquid at 5 degrees Celsius.

The food product of the invention may contain some air, or may even be slightly whipped to impart specific organoleptic properties like in a whipped butter like product. Preferably the food product of the invention has an overrun of less than 100%, more preferable less than 50%, even more preferably less than 20% and still more preferably less than 10%.

### Fat

The food product comprises from 3 to 10 wt% of fat based on total amount of product. Preferably the amount of fat is from 3 to 8 wt% and more preferably from 4 to 6 wt%.

The fat comprises at least 35 wt% of P2U triglycerides based on total amount of fat. It was found that this provides for good product structure and organoleptic properties even when the amount of SAFA is less that 60 wt% or lower (based on total amount of fat). P is palmitic acid and U is unsaturated fatty acid. The amount of SAFA and P2U should be such that the ratio of SAFA:P2U is not more than 1.7, that is, it should be 1.7 or below. For example, a fat with 60 wt% of SAFA and 35 wt% of P2U gives a ratio of 1.7.

Preferably the amount of P2U in the fat is at least 40 wt%, more preferably at least 45 wt% and even more preferably at least 50 wt% as it was found that a higher amount of P2U provides for a better structure and organoleptic properties without the need for high amounts of SAFA.

Preferably the ratio of SAFA:P2U is up to 1.6, more preferably up to 1.5, even more preferably up to 1.4 and still even more preferably up to 1.3 as this allows for a healthier product while maintaining the desired product properties. The ratio of SAFA:P2U is at least 1.

The food products of the invention have excellent firmness, expressed as Stevens value, over the amount of SAFA.

The fat comprises at least a vegetable fat and may comprise dairy fat. However, preferably the fat is essentially free of dairy fat which implies that the level of dairy fat on total fat is preferably below 10 wt%, more preferred below 5 wt% and even more preferred below 1 wt%. This regards added dairy fat and does not include dairy fat derived from the other ingredients such as dairy fat included in milk powders.

The fat may be a single fat or a blend of different fats. The vegetable fat may be selected from any edible source but it is preferred that the fat is chosen from coconut oil, palm kernel oil, palm oil, soybean oil, rapeseed oil, sunflower oil, safflower oil and blends thereof. Preferably the fat comprises at least a palm based vegetable fat. Even more preferably the fat comprises a palm based fat and liquid vegetable oil and is free of dairy fat.

Preferably the unsaturated fatty acid is oleic acid (C18:1), that is the P2U is P20, wherein O is oleic acid.

Preferably the fat comprises up to 6 wt% P3 triglycerides, more preferably up to 5 wt%, even more preferably up to 4 wt% and sill even more preferably up to 3 wt%.

### Natural fats

Triglycerides (i.e. triacylglycerols (TAG)) are the major constituents of natural fats and oils and are esters of glycerol and fatty acids. The chemical structure of the fatty acid and the distribution of the fatty acids over the glycerol backbone determine (at least partly) the physical properties of a fat. The physical properties of fats, like for example the solid fat content (SFC) expressed as N-value, can be modified by altering the chemical structure of the fat. Well known techniques that are widely used include hydrogenation and interesterification.

Hydrogenation alters the degree of unsaturation of the fatty acids and as such alters the fatty acid composition. This allows e.g. plastic fats to be made from liquid oils. A draw back of hydrogenation, especially of partial hydrogenation, is the formation of by products like e.g. trans fatty acids. Furthermore additional process steps are required and some consumers perceive a chemical process such as hydrogenation as undesirable.

Interesterification retains the fatty acid composition but alters the distribution of the fatty acids over the glycerol backbones. Interesterification can be done chemically or with the aid of enzymes. Usually a mixture of two different fats, that by themselves are not or less suitable as a structuring fat, is subjected to interesterification. The resulting interesterified fat will have improved structuring properties compared to the starting materials. A draw back of interesterification may be the formation of by products like e.g. free fatty acids and diglycerides. Also enzymatic interesterification introduces additional process steps which may be complicated and introduce additional costs.

Furthermore some consumers perceive chemically modified fats as unnatural and therefore undesirable.

Therefore, the food products according to the invention preferably are free of chemically modified fat.

### Protein

The food product comprises from 0.05 to 15 wt% of protein based on total amount of product. The protein, in combination with the low pH, provides at least part of the structure and taste of the product.

Preferably the amount of protein is from 1 to 10 wt%, preferably 2 to 8 wt% and more preferably from 3 to 6 wt%.

The protein is preferably selected from milk protein, soy protein, pea protein and combinations thereof. The use of milk protein as at least part of the protein is highly preferred because of the positive effect of milk protein on the taste and flavor of the final product.

Preferably at least 50 wt% of the protein is milk protein, more preferably at least 70 wt%, even more preferably at least 80 wt%, still even more preferably at least 90 wt% and even still more preferably at least 95 wt%.

Suitable sources of milk protein are for example milk, skimmed milk or skim milk powder, butter milk or butter milk powder, butter serum powder, whey or whey powder, whey protein concentrate, whey protein isolate, caseinate or a combination thereof. The most preferred protein is protein originating from buttermilk because of its superb taste and flavor contribution. The most preferred proteins are whey, whey protein isolate or whey protein concentrates

### Acidification

The food products of the invention preferably have a pH of about 4.0 to 5.8, more preferably between 4.2 and 5.2 and most preferred between 4.3 and 4.7.

Acidification can be obtained by any suitable method such as microbial acidification (i.e. fermentation) or chemical acidification for example using lactic acid, glucono deltalactone or another acidifying agent. The pH can be further adjusted by the use of a base such as sodium hydroxide.

Acidification may take place by microbiological or chemical acidification or a combination of both. In case the products are acidified microbiologically it is preferred that the cultures are made inactive after the acidification.

The pH of the food product is a pH below the pH of gelling of the protein. When more than one protein is used, the acidification is done at a pH below the pH of the protein having the highest pH of gelling.

When a protein like whey protein is used, the pH of gelling is about 5.8 and so in this case, the preferred pH over which the emulsion is acidified is about 5.8 to 3.5. The acidification may be carried out using acidifying bacteria or a chemical acidifying agent. When acidifying bacteria are used, the emulsion is cooled to the culturing temperature. When the desired pH is achieved, the emulsion may be heated to a high temperature preferably above 60 C to inactivate the culturing bacteria.

Preferably the food product is a fermented food product as such a method of acidification may provide a better taste profile. In addition we have found that fermentation works best with the fat, SAFA and P2U content of the food products of the invention.

### Further ingredients

Food products of the invention may comprise other ingredients like thickeners and gelling agents.

The concentration of thickeners and gelling agents preferably is from 0.01 to 3 wt%. It will be appreciated that each individual thickener and gelling agent will have its own optimal concentration, which may depend on other characteristics of the food product such as the protein source, pH and salt content.

The invention also concerns a process for the preparation of the food product of the invention comprising the use of a palm based fat comprising at least 35 wt% of P2U triglycerides.

Preferably the food product is acidified using fermentation.

The invention is now illustrated by the following non-limiting examples.

### Examples

### Stevens value

Stevens values give an indication about the hardness (also called firmness) of a product at a given temperature. Firmness is the maximum force, expressed in grams, to penetrate a product over a given distance at a fixed speed with a specific probe. The Stevens value at a given temperature is determined according to the following protocol.

Products are stored at 5 degrees Celsius for at least 24 hours before being measured. The hardness of the product is then measured with a TA.XT.plus Texture Analyser (ex. Stable Micro Systems Ltd.) equipped with a cylindrical probe with a diameter of 25.4 mm (1.0 inch) and operated in "normal" mode. The probe is pushed into the product at a speed of 2 mm/s, a trigger force of 5 gram over a distance of 10 mm. The maximum force required is read from the digital display and is expressed in gram.

### Preparation

Food products according to the invention (examples 1 to 4) and not according to the invention (comparative examples A to D) were prepared using the general composition as in Table 1, using the fat blends as in Table 2 according to the following method.

The water (room temperature) was put in a non-heated jacketed premix vessel. About half the amount of water was combined with the sweet butter milk powder, skimmed milk powder and starch in a separate vessel. After mixing with a Silverson high speed mixer, the mixture was put back into the premix vessel. The content of the premix vessel was stirred and heated to about 50 degrees Celsius. At about 50 degrees Celsius the molten fat blend was added. The combined mixture was heated up to about 75 degrees Celsius and pumped at a flow rate of approximately 120 kg/hr through an in-line Silverson mixer running at 6000 rpm, a tubular heat exchanger for pasteurization at 83 degrees Celsius and a single stage homogenizer at 150 bar After homogenization the mixture was collected in a second vessel and cooled to about 38 degrees Celsius.

Subsequently the lactic acid culture was added, stirred for about 5 minutes and left to ferment. When the mixture reached a pH of between 4.3 and 4.7 the mixture was stirred to break-up the curd. About a quarter of this fermented mixture was mixed with the micro crystalline cellulose and locust bean gum with a Silverson high speed mixer and subsequently mixed with the remainder of the product.

The combined mixture was heated to about 75 degrees Celsius and subsequently pumped at a flow rate of approximately 80 kg/hr through a tubular heat exchanger for pasteurization at 83 degrees Celsius and a single stage homogenizer at 100 bars.

The product was hot filled in sealed tubs and stored at 5 degrees Celsius. The firmness (Stevens value) was measured after 7 days using the protocol described above.

**Table 1, Composition of the food product**

| **Ingredient** | **wt% on total product** |
|---|---|
| Fat blend - see Table 2 | 5.0 |
| Sweet buttermilk powder | 7.5 |
| Skimmed milk powder | 3.0 |
| Lactic acid culture (Yoflex mild 1.0, ex. Danisco) | 0.0048 |
| Tapioca starch | 1.5 |
| Locust bean gum | 0.4 |
| Micro crystalline cellulose and carboxy methyl cellulose (Avicel RC 591, ex. FMC Biopolymer) | 0.2 |
| De-mineralized water | Balance to 100 wt% |

**Table 2, Fat blends**

| **Fat blend** | **Composition** |
|---|---|
| 1 | 100 wt% palm oil midfraction (ex. Loders) |
| 2 | 100 wt% palm oil midfraction (ex. Wilmar) |
| 3 | 100 wt% palm oil midfraction (ex. Unimills) |
| 4 | 75 wt% palm oil midfraction (ex. Loders) / 25 wt% rapeseed oil |
| A | 100 wt% refined anhydrous butterfat |
| B | 50 wt% fully hydrogenated coconut oil / 50 wt% palm oil olein |
| C | 100 wt% palm oil stearin with iodine value of 35 |
| D | 65 wt% partially hydrogenated palm kernel oil with a slip melting point of 38 degrees Celsius / 35 wt% rapeseed oil |

**Table 3, Fat blend parameters and product performance**

| **Fat blend** | **SAFA # (wt%)** | **P2U # (wt%)** | **P3 # (wt%)** | **Stevens 1.0 inch probe ## (gram)** |
|---|---|---|---|---|
| 1 | 58 | 48 | 1.4 | 41 |
| 2 | 57 | 40 | 3.5 | 30 |
| 3 | 57 | 40 | 3 | 30 |
| 4 | 46 | 36 | 1.1 | 32 |
| A | 69 | 4.4 | 1.8 | 29 |
| B | 72 | 13 | 0.3 | 21 |
| C | 66 | 24 | 29 | 28 |
| D | 65 | 0.2 | 0.1 | 31 |

| | | | | |
|---|---|---|---|---|
| # Wt% based on total fat; ## Stevens at 5 degrees Celsius measured after 7 day storage at 5 degrees Celsius. | | | | |

## Claims

1. Spoonable non-liquid water-continuous acidified food product having a pH-value between 3.5 and 5.8, the food product comprising at least 60 wt% water and further comprising from 3 to 10 wt% fat and from 0.05 to 15 wt% protein, wherein the fat comprises at least a vegetable fat and wherein the fat comprises up to 60 wt% of saturated fatty acids (SAFA), at least 35 wt% P2U triglycerides and up to 7 wt% P3 triglycerides, wherein the ratio of SAFA:P2U is up to 1.7, and wherein P is palmitic acid and U is unsaturated fatty acid, wherein the product is spoonable and non-liquid at a temperature of 5 degrees Celsius, and wherein the food product is a water-continuous emulsion, and wherein the ratio of SAFA:P2U is at least 1.

2. Food product according to claim 1 wherein the amount of fat is from 3 to 8 wt%, preferably 4 to 6 wt%.

3. Food product according to claim 1 or claim 2 wherein the fat comprises at least 40 wt% P2U triglycerides, preferably at least 45 wt% and more preferably at least 50 wt%.

4. Food product according to any one of claims 1 to 3 wherein the fat comprises up to 6 wt% P3 triglycerides, preferably up to 5 wt%, more preferably up to 4 wt% and even more preferably up to 3 wt%.

5. Food product according to any one of claims 1 to 4 wherein the ratio of SAFA:P2U is up to 1.6, preferably up to 1.5, more preferably up to 1.4 and even more preferably up to 1.3.

6. Food product according to any one of claims 1 to 5 wherein U is the unsaturated fatty acid oleic acid (C18:1).

7. Food product according to any one of claims 1 to 6 wherein the fat comprises at least a palm based vegetable fat.

8. Food product according to any one of claims 1 to 6 wherein the fat is essentially free of dairy fat and comprises up to 10 wt% of dairy fat, preferably up to 5 wt% and more preferably up to 1 wt%.

9. Food product according to any one of claims 1 to 8 wherein the fat is free of chemically modified fat.

10. Food product according to any one of claims 1 to 9 wherein the amount of protein is from 1 to 10 wt%, preferably 2 to 8 wt% and more preferably from 3 to 6 wt%.

11. Food product according to any one of claims 1 to 10 wherein at least 50 wt% of the protein is milk protein, preferably at least 70 wt%, more preferably at least 80 wt%, even more preferably at least 90 wt% and still even more preferably at least 95 wt%.

12. Food product according to any one of claims 1 to 11 having a ph-value between 4.0 and 5.8, preferably between 4.2 and 5.2 and more preferably between 4.3 and 4.7.

13. Food product according to any one of claims 1 to 12 wherein the food product is a fermented food product.

14. Process for the preparation of a food product according to any one of claims 1 to 13 comprising the use of a palm based fat comprising at least 35 wt% of P2U triglycerides.

15. Process according to claim 14 wherein the food product is acidified using fermentation.

## Patentansprüche

1. Löffelbares, nicht-flüssiges, angesäuertes Nahrungsmittelprodukt mit Wasser als kontinuierlicher Phase, das einen pH-Wert von 3,5 bis 5,8 aufweist, wobei das Nahrungsmittelprodukt mindestens 60 Gew.-% Wasser und ferner 3 bis 10 Gew.-% Fett und 0,05 bis 15 Gew.-% Protein aufweist, wobei das Fett zumindest ein pflanzliches Fett aufweist, und wobei das Fett bis zu 60 Gew.-% gesättigte Fettsäuren (SAFA), mindestens 35 Gew.-% P2U-Triglyceride und bis zu 7 Gew.-% P3-Triglyceride aufweist, wobei das Verhältnis SAFA : P2U bis zu 1,7 beträgt und wobei P Palmitinsäure und U ungesättigte Fettsäure ist, wobei das Produkt löffelbar und bei einer Temperatur von 5 °C nicht flüssig ist und wobei das Nahrungsmittelprodukt eine Emulsion mit Wasser als kontinuierlicher Phase ist und wobei das Verhältnis SAFA : P2U mindestens 1 beträgt.

2. Nahrungsmittelprodukt nach Anspruch 1,
wobei die Fettmenge 3 bis 8 Gew.-%, vorzugsweise 4 bis 6 Gew.-% beträgt.

3. Nahrungsmittelprodukt nach Anspruch 1 oder 2,
wobei das Fett mindestens 40 Gew.-%, vorzugsweise mindestens 45 Gew.-% und stärker bevorzugt mindestens 50 Gew.-% P2U-Triglyceride aufweist.

4. Nahrungsmittelprodukt nach einem der Ansprüche 1 bis 3,
wobei das Fett bis zu 6 Gew.-%, vorzugsweise bis zu 5 Gew.-%, stärker bevorzugt bis zu 4 Gew.-% und noch stärker bevorzugt bis zu 3 Gew.-% P3-Triglyceride aufweist.

5. Nahrungsmittelprodukt nach einem der Ansprüche 1 bis 4,
wobei das Verhältnis SAFA : P2U bis zu 1,6, vorzugsweise bis zu 1,5, stärker bevorzugt bis zu 1,4 und noch stärker bevorzugt bis zu 1,3 beträgt.

6. Nahrungsmittelprodukt nach einem der Ansprüche 1 bis 5,
wobei U die ungesättigte Fettsäure Oleinsäure (C18:1) ist.

7. Nahrungsmittelprodukt nach einem der Ansprüche 1 bis 6,
wobei das Fett mindestens ein auf Palmen basierendes pflanzliches Fett aufweist.

8. Nahrungsmittelprodukt nach einem der Ansprüche 1 bis 6,
wobei das Fett im Wesentlichen frei von Milchfett ist und bis zu 10 Gew.-%, vorzugsweise bis zu 5 Gew.-% und stärker bevorzugt bis zu 1 Gew.-% Milchfett aufweist.

9. Nahrungsmittelprodukt nach einem der Ansprüche 1 bis 8,
wobei das Fett frei von chemisch modifiziertem Fett ist.

10. Nahrungsmittelprodukt nach einem der Ansprüche 1 bis 9,
wobei die Proteinmenge 1 bis 10 Gew.-%, vorzugsweise 2 bis 8 Gew.-% und stärker bevorzugt 3 bis 6 Gew.-% beträgt.

11. Nahrungsmittelprodukt nach einem der Ansprüche 1 bis 10,
wobei mindestens 50 Gew.-%, vorzugsweise mindestens 70 Gew.-%, stärker bevorzugt mindestens 80 Gew.-%, noch stärker bevorzugt mindestens 90 Gew.-% und noch stärker bevorzugt mindestens 95 Gew.-% des Proteins Milchprotein sind.

12. Nahrungsmittelprodukt nach einem der Ansprüche 1 bis 11,
das einen pH-Wert von 4,0 bis 5,8, vorzugsweise von 4,2 bis 5,2 und noch stärker bevorzugt von 4,3 bis 4,7 aufweist.

13. Nahrungsmittelprodukt nach einem der Ansprüche 1 bis 12,
wobei das Nahrungsmittelprodukt ein fermentiertes Nahrungsmittelprodukt ist.

14. Verfahren zum Herstellen eines Nahrungsmittelproduktes nach einem der Ansprüche 1 bis 13,
das die Verwendung eines auf Palmen basierenden Fetts aufweist, das mindestens 35 Gew.-% P2U-Triglyceride aufweist.

15. Verfahren nach Anspruch 14,
wobei das Nahrungsmittelprodukt unter Anwendung der Fermentierung angesäuert wird.

## Revendications

1. Produit alimentaire acidifié continu dans l'eau non liquide pouvant être consommé à la cuillère présentant une valeur de pH de 3,5 à 5,8, le produit alimentaire comprenant au moins 60 % en masse d'eau et comprenant de plus de 3 à 10 % en masse de graisse et de 0,05 à 15 % en masse de protéine, dans lequel la graisse comprend au moins une graisse végétale et dans lequel la graisse comprend jusqu'à 60 % en masse d'acides gras saturés (SAFA), au moins 35 % en masse de triglycérides P2U et jusqu'à 7 % en masse de triglycérides P3, dans lequel le rapport de SAFA:P2U est d'au plus 1,7, et dans lequel P est l'acide palmitique et U est un acide gras insaturé, dans lequel le produit peut être consommé à la cuillère et est non liquide à une température de 5 degrés Celsius, et dans lequel le produit alimentaire est une émulsion continue dans l'eau, et dans lequel le rapport de SAFA:P2U est d'au moins 1.

2. Produit alimentaire selon la revendication 1, dans lequel la quantité de graisse est de 3 à 8 % en masse, de préférence de 4 à 6 % en masse.

3. Produit alimentaire selon la revendication 1 ou la revendication 2, dans lequel la graisse comprend au moins 40 % en masse de triglycérides P2U, de préférence au moins 45 % en masse et bien mieux encore au moins 50 % en masse.

4. Produit alimentaire selon l'une quelconque des revendications 1 à 3, dans lequel la graisse comprend jusqu'à 6 % en masse de triglycérides P3, de préférence jusqu'à 5 % en masse, encore mieux jusqu'à 4 % en masse et bien mieux encore jusqu'à 3 % en masse.

5. Produit alimentaire selon l'une quelconque des revendications 1 à 4, dans lequel le rapport de SAFA:P2U est d'au plus 1,6, de préférence d'au plus 1,5, encore mieux d'au plus 1,4 et bien mieux encore d'au plus 1,3.

6. Produit alimentaire selon l'une quelconque des revendications 1 à 5, dans lequel U est l'acide oléique d'acide gras insaturé (C18:1).

7. Produit alimentaire selon l'une quelconque des revendications 1 à 6, dans lequel la graisse comprend au moins une graisse végétale à base de palme.

8. Produit alimentaire selon l'une quelconque des revendications 1 à 6, dans lequel la graisse est essentiellement exempte de graisse de lait et comprend jusqu'à 10 % en masse de graisse de lait, de préférence jusqu'à 5 % en masse et encore mieux jusqu'à 1 % en masse.

9. Produit alimentaire selon l'une quelconque des revendications 1 à 8, dans lequel la graisse est exempte de graisse chimiquement modifiée.

10. Produit alimentaire selon l'une quelconque des revendications 1 à 9, dans lequel la quantité de protéine est de 1 à 10 % en masse, de préférence de 2 à 8 % en masse et encore mieux de 3 à 6 % en masse.

11. Produit alimentaire selon l'une quelconque des revendications 1 à 10, dans lequel au moins 50 % en masse de la protéine est une protéine de lait, de préférence au moins 70 % en masse, encore mieux au moins 80 % en masse, bien mieux encore au moins 90 % en masse et particulièrement bien mieux encore d'au moins 95 % en masse.

12. Produit alimentaire selon l'une quelconque des revendications 1 à 11 présentant une valeur de pH de 4,0 à 5,8, de préférence de 4,2 à 5,2 et bien mieux encore de 4,3 à 4,7.

13. Produit alimentaire selon l'une quelconque des revendications 1 à 12, dans lequel le produit alimentaire est un produit alimentaire fermenté.

14. Procédé pour la préparation d'un produit alimentaire selon l'une quelconque des revendications 1 à 13 comprenant l'utilisation d'une graisse à base de palme comprenant au moins 35 % en masse de triglycérides P2U.

15. Procédé selon la revendication 14, dans lequel le produit alimentaire est acidifié en utilisant une fermentation.
